# EUROPEAN PATENT APPLICATION

(11) **EP 4 268 625 A1**
(43) Date of publication of application: **01.11.2023**
(21) Application number: 22867530.2
(22) Date of filing: 11.07.2022
(51) Int. Cl.: A24D 1/00, A24D 1/02, A24D 1/04, A24B 15/30, C08L 1/00, C08J 5/18, A24B 3/14, A24B 15/12, A24B 15/28

(54) **SMOKING ARTICLE WITH ENHANCED TOBACCO FLAVOR AND METHOD FOR MANUFACTURING SAME**

(30) Priority: 07.09.2021 KR 20210119002
(71) Applicant: KT & G Corporation, Daejeon 34337 (KR)
(72) Inventor: KIM, Ick Joong, Daejeon 34128 (KR); JUNG, Kyung Bin, Daejeon 34128 (KR)
(74) Representative: Ter Meer Steinmeister & Partner
(86) International application number: PCT/KR2022/010037
(87) International publication number: WO 2023/038261

(57) **Abstract**

A smoking article with an improved tobacco flavor and a method of producing the same are provided. The smoking article according to some embodiments of the present disclosure may include a smoking material portion, a filter portion, and a wrapper configured to wrap around at least a portion of the smoking material portion. Here, a sheet-type material including a plant extract may be applied to the smoking material portion or the wrapper. By expressing a tobacco flavor during smoking, the sheet-type material can improve a tobacco flavor of the smoking article.

## Description

### [Technical Field]

The present disclosure relates to a smoking article with an improved tobacco flavor and a method of producing the same, and more particularly, to a smoking article applying a sheet-type material from which a tobacco flavor is expressed, thus providing an improved tobacco flavor during smoking, and a method of producing the smoking article.

### [Background Art]

In recent years, with an increase in demand for low-nicotine smoking articles, interest in technologies for producing low-nicotine smoking articles has increased. In the traditional method of producing a low-nicotine smoking article, tobacco leaves with low nicotine content or expanded tobacco leaves are processed to produce a tobacco material added to a smoking article. This is because, when nicotine content of the tobacco material itself is reduced, the amount of transferred nicotine of the smoking article is naturally reduced.

However, the above method has a problem that not only the amount of transferred nicotine, but also the tobacco flavor experienced by the user, is reduced.

### [Disclosure]

### [Technical Problem]

Some embodiments of the present disclosure are directed to providing a smoking article with an improved tobacco flavor and a method of producing the smoking article.

Some embodiments of the present disclosure are also directed to providing a sheet-type material, which can improve a tobacco flavor while not increasing the amount of transferred nicotine, and a method of producing the sheet-type material.

Objectives of the present disclosure are not limited to the above-mentioned objectives, and other unmentioned objectives should be clearly understood by those of ordinary skill in the art to which the present disclosure pertains from the description below.

### [Technical Solution]

A smoking article according to some embodiments of the present disclosure for achieving the above objectives may include a smoking material portion, a filter portion, and a wrapper configured to wrap around at least a portion of the smoking material portion. Here, a sheet-type material including a plant extract may be applied to the smoking material portion or the wrapper.

In some embodiments, the plant extract may include a cocoa extract.

In some embodiments, the sheet-type material may include a modified cellulose material.

In some embodiments, the sheet-type material may not include a nicotine component.

In some embodiments, the sheet-type material may include at least one material among caffeine, an alkaloid material, and a cannabinoid material.

In some embodiments, the smoking material portion may include a tobacco material formed by processing tobacco leaves whose nicotine content is 0.5 wt% or lower.

In some embodiments, the sheet-type material may be included in a cut form in the smoking material portion.

In some embodiments, the sheet-type material may constitute at least a portion of the wrapper or may be disposed on an inner side of the wrapper.

### [Advantageous Effects]

According to some embodiments of the present disclosure, a sheet-type material including a plant extract, which can express a tobacco flavor, can be provided. Due to being able to improve a tobacco flavor while not increasing the amount of transferred nicotine of a smoking article, the sheet-type material can simultaneously satisfy users' needs for low-nicotine smoking articles and meet users' smoking satisfaction.

Also, a smoking article to which the sheet-type material is applied can be provided. The smoking article can ensure an improved tobacco flavor.

The advantageous effects according to the technical spirit of the present disclosure are not limited to those mentioned above, and other unmentioned advantageous effects should be clearly understood by those of ordinary skill in the art from the description below.

### [Description of Drawings]

FIG. 1 is an exemplary view schematically illustrating a smoking article with an improved tobacco flavor according to some embodiments of the present disclosure.
FIGS. 2 to 5 are exemplary views for describing methods of applying a sheet-type material according to some embodiments of the present disclosure.
FIGS. 6 and 7 are exemplary views for describing processed forms of the sheet-type material according to some embodiments of the present disclosure.
FIG. 8 is an exemplary view schematically illustrating a smoking article with an improved tobacco flavor according to some other embodiments of the present disclosure.
FIG. 9 is an exemplary view schematically illustrating a smoking article with an improved tobacco flavor according to still some other embodiments of the present disclosure.

### [Modes of the Invention]

Hereinafter, exemplary embodiments of the present disclosure will be described in detail with reference to the accompanying drawings. Advantages and features of the present disclosure and methods of achieving the same should become clear from embodiments described in detail below with reference to the accompanying drawings. However, the technical spirit of the present disclosure is not limited to the following embodiments and may be implemented in various different forms. The following embodiments only make the technical spirit of the present disclosure complete and are provided to completely inform those of ordinary skill in the art to which the present disclosure pertains of the scope of the disclosure. The technical spirit of the present disclosure is defined only by the scope of the claims.

In assigning reference numerals to components of each drawing, it should be noted that the same reference numerals are assigned to the same components where possible even when the components are illustrated in different drawings. Also, in describing the present disclosure, when detailed description of a known related configuration or function is deemed as having the possibility of obscuring the gist of the present disclosure, the detailed description thereof will be omitted.

Unless otherwise defined, all terms including technical or scientific terms used in this specification have the same meaning as commonly understood by those of ordinary skill in the art to which the present disclosure pertains. Terms defined in commonly used dictionaries should not be construed in an idealized or overly formal sense unless expressly so defined herein. Terms used in this specification are for describing the embodiments and are not intended to limit the present disclosure. In this specification, a singular expression includes a plural expression unless the context clearly indicates otherwise.

Also, in describing components of the present disclosure, terms such as first, second, A, B, (a), and (b) may be used. Such terms are only used for distinguishing one component from another component, and the essence, order, sequence, or the like of the corresponding component is not limited by the terms. In a case in which a certain component is described as being "connected," "coupled," or "linked" to another component, it should be understood that, although the component may be directly connected or linked to the other component, still another component may also be "connected," "coupled," or "linked" between the two components.

The terms "comprises" and/or "comprising" used herein do not preclude the possibility of presence or addition of one or more components, steps, operations, and/or devices other than those mentioned.

First, some terms used in various embodiments of the present disclosure will be clarified.

In the following embodiments, "smoking article" may refer to any product that can be smoked or any product that can provide a smoking experience, regardless of whether the product is based on tobacco, tobacco derivatives, expanded tobacco, reconstituted tobacco, or tobacco substitutes. For example, smoking articles may include products that can be smoked, such as a cigarette, a cigar, and a cigarillo. As another example, smoking articles may include a burning-type smoking article and a heating-type smoking article.

In the following embodiments, "smoking material" may refer to any material that generates smoke and/or an aerosol or is used in smoking. For example, the smoking material may include a tobacco material. For example, the tobacco material may include pieces of tobacco leaves, tobacco stems, or materials obtained by processing the pieces of tobacco leaves or tobacco stems. As a more specific example, the tobacco material may include ground tobacco leaves, ground reconstituted tobacco, expanded shredded tobacco, expanded tobacco midribs, and reconstituted tobacco leaves. However, the tobacco material is not limited thereto.

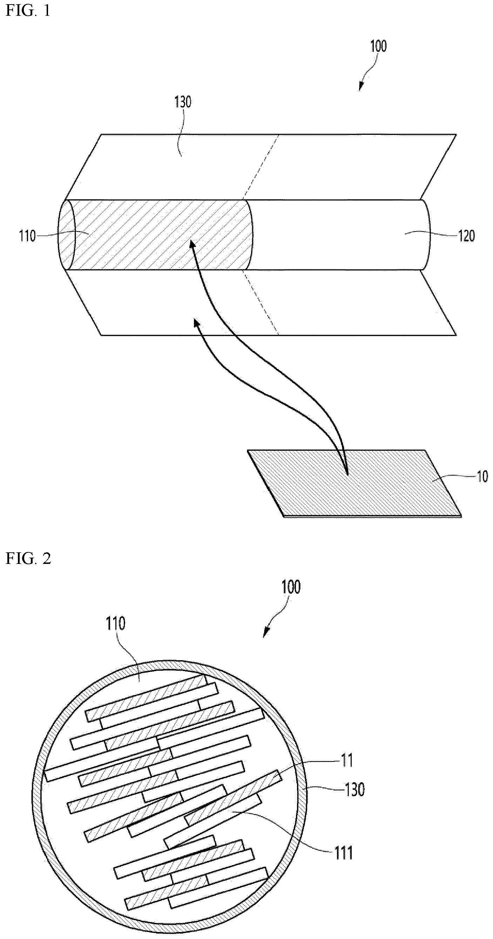

In the following embodiments, "upstream" or "upstream direction" may refer to a direction moving away from an oral region of a smoker, and "downstream" or "downstream direction" may refer to a direction approaching the oral region of the smoker. The terms "upstream" and "downstream" may be used to describe relative positions of components constituting a smoking article. For example, in a smoking article 100 illustrated in FIG. 1, a filter portion 120 is disposed downstream or in a downstream direction of a smoking material portion 110, and the smoking material portion 110 is disposed upstream or in an upstream direction of the filter portion 120.

In the following embodiments, "longitudinal direction" may refer to a direction corresponding to a longitudinal axis of a smoking article.

In the following embodiments, "puff" refers to inhalation by a user (smoker), and the inhalation may be a situation in which a user draws smoke into his or her oral cavity, nasal cavity, or lungs through the mouth or nose.

In the following embodiments, "sheet" may refer to a thin layer component whose width and length are substantially larger than a thickness thereof. The term "sheet" may be interchangeably used with the term "web" or "film" in the art.

Hereinafter, various embodiments of the present disclosure will be described in detail with reference to the accompanying drawings.

FIG. 1 is an exemplary view schematically illustrating the smoking article 100 with an improved tobacco flavor according to some embodiments of the present disclosure.

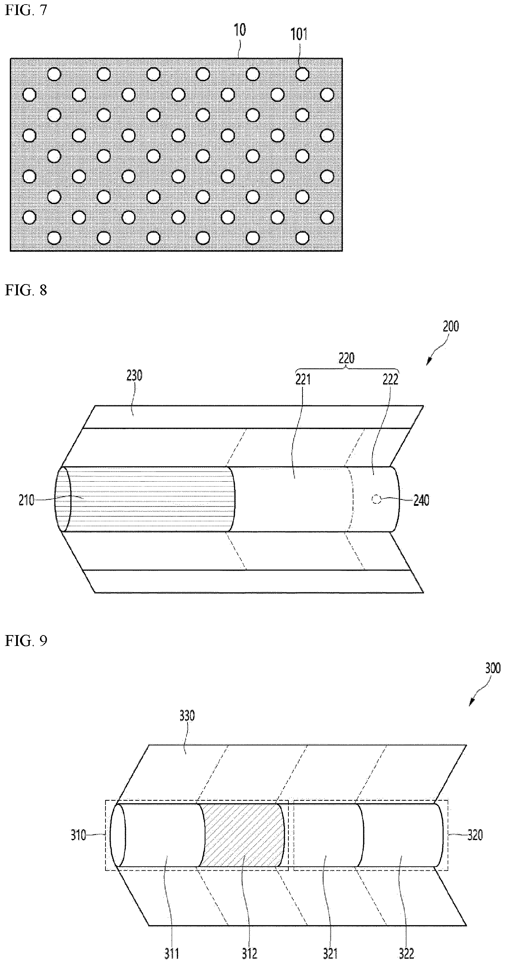

As illustrated in FIG. 1, the smoking article 100 may include the filter portion 120, the smoking material portion 110, and a wrapper 130. However, only the components relating to the embodiment of the present disclosure are illustrated in FIG. 1. Therefore, those of ordinary skill in the art to which the present disclosure pertains should understand that the smoking article 100 may further include general-purpose components other than the components illustrated in FIG. 1. Also, FIG. 1 only illustrates one example of smoking articles according to various embodiments of the present disclosure, and a detailed structure of the smoking article may be changed from that illustrated in FIG. 1. FIGS. 8 and 9 may be further referenced for other examples of the detailed structure of the smoking article. Hereinafter, each component of the smoking article 100 will be described.

The filter portion 120 may perform a function of filtering smoke and/or an aerosol generated from the smoking material portion 110. To this end, the filter portion 120 may include a filter material. Examples of the filter material may include a cellulose acetate fiber, paper, etc., but the scope of the present disclosure is not limited thereto. The filter portion 120 may further include the wrapper 130 configured to wrap around the filter material (plug).

The filter portion 120 may be disposed downstream of the smoking material portion 110 and may be connected to a downstream end of the smoking material portion 110. For example, the filter portion 120 and the smoking material portion 110 may have a cylindrical shape (rod shape), may be aligned in the longitudinal axis direction, and may be connected by a tipping wrapper. The tipping wrapper may wrap around at least a portion of the filter portion 120 and at least a portion of the smoking material portion 110 together to connect the filter portion 120 and the smoking material portion 110. In a case in which the filter portion 120 forms a downstream end of the smoking article 100, the filter portion 120 may also serve as a mouthpiece that comes into contact with the oral region of the smoker.

Since the filter portion 120 is produced in the form of a rod, the filter portion 120 may be referred to as a "filter rod 120" in some cases and may be produced in various shapes such as a cylindrical shape, a tubular shape including a hollow therein, and a recessed shape.

Next, the smoking material portion 110 may include a smoking material that can generate smoke and/or an aerosol when burned or heated. The smoking material portion 110 may further include the wrapper 130 configured to wrap around the smoking material.

The smoking material portion 110 may be disposed upstream of the filter portion 120 and may be connected to an upstream end of the filter portion 120. The smoke and/or aerosol generated from the smoking material portion 110 may be delivered to the oral region of the smoker via the filter portion 120 by a puff.

Since the smoking material portion 110 is also produced in the form of a rod, the smoking material portion 110 may be referred to as a "smoking material rod 110" or a "tobacco rod 110" in some cases.

For example, the smoking material may include a tobacco material. For example, the tobacco material may have the form of shredded tobacco, tobacco particles, tobacco sheets, tobacco beads, tobacco granules, or tobacco extracts but is not limited thereto.

In some embodiments, the smoking material may include a tobacco material formed by processing low-nicotine tobacco leaves. Here, the low-nicotine tobacco leaves may refer to tobacco leaves in which content of nicotine (e.g., content of nicotine in leaves) is lower than in general tobacco leaves (e.g., a common breed of tobacco leaves). For example, the low-nicotine tobacco leaves may refer to tobacco leaves whose nicotine content is lower than or equal to about 1.0 wt%, 0.5 wt%, 0.3 wt%, 0.2 wt%, or 0.1 wt%. The low-nicotine tobacco leaves may be obtained using various methods such as crossbreeding and nicotine reduction treatment and may be obtained using any method. The general tobacco leaves may refer to tobacco leaves whose nicotine content is higher than or equal to about 1.0 wt%, 1.5 wt%, 2.0 wt%, 3.0 wt%, or 4.0 wt%. According to the present embodiment, by using the tobacco material based on low-nicotine tobacco leaves, the amount of transferred nicotine of the smoking article 100 can be significantly reduced. Therefore, users' needs for low-nicotine smoking articles can be satisfied. However, as the amount of transferred nicotine is reduced, a tobacco flavor (or a tobacco smoke taste) experienced by a user may also be reduced, and this reduction can be compensated for by a sheet-type material 10. The sheet-type material 10 will be described below.

Also, in some embodiments, the smoking material may further include an additive such as a wetting agent (moisturizer), a flavoring agent, and/or an organic acid. For example, the wetting agent may include at least one of glycerin, propylene glycol, ethylene glycol, dipropylene glycol, diethylene glycol, triethylene glycol, tetraethylene glycol, and oleyl alcohol. The wetting agent may maintain moisture in the tobacco material at an optimum level and thus soften the inherent flavor and produce a large amount of vapor. Also, for example, the flavoring agent may include licorice, saccharose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cinnamon, ylang-ylang, sage, spearmint, ginger, cilantro, a clove extract (or a clove material), coffee, or the like.

Next, the wrapper 130 may refer to a wrapper that wraps around at least a portion of the smoking material portion 110 and/or the filter portion 120. The wrapper 130 may refer to a separate wrapper of the smoking material portion 110 or the filter portion 120 or may refer to a wrapper, such as a tipping wrapper, that wraps around at least a portion of the smoking material portion 110 and at least a portion of the filter portion 120 together. The wrapper 130 may also collectively refer to all wrappers used in the smoking article 100. The wrapper 130 may be made of porous or nonporous wrapping paper, but the scope of the present disclosure is not limited thereto. For example, the wrapper 130 may be made of a metal foil or have a form in which wrapping paper and a metal foil are laminated with each other.

According to various embodiments of the present disclosure, as illustrated, the sheet-type material 10 including a plant extract that expresses a tobacco flavor (more precisely, a tobacco-like flavor) may be applied to the smoking material portion 110 or the wrapper 130. Alternatively, the sheet-type material 10 may be applied to the filter portion 120. The sheet-type material 10 applied in this way may continuously express a tobacco flavor during smoking and thus improve a tobacco flavor of the smoking article 100. For example, the sheet-type material 10 may improve (compensate for) a tobacco flavor of the smoking article 100 that is insufficient due to applying low-nicotine tobacco leaves and may further increase a tobacco flavor of the smoking article 100 to which general tobacco leaves are applied. Further, the sheet-type material 10 is a material produced in a solid phase and can easily delay volatilization of a flavoring (e.g., a plant extract) contained therein and thus continuously express a tobacco flavor during smoking.

In the embodiments described above, examples of the plant extract may include a cocoa extract, a carob bean extract, a fenugreek extract, a chamomile extract, an alfalfa extract, an angelica root extract, a benzoin extract, a chicory extract, a coffee extract, an immortelle extract, a labdanum extract, a lavage extract, a mate extract, a tea extract, a valerian root extract, a prune extract, and a raisin extract. As a result of continuous research and experiments, the inventors of the present disclosure have confirmed that the plant extracts listed above express a tobacco-like flavor. However, the scope of the present disclosure is not limited thereto, and various other plant extracts that express a tobacco-like flavor may be used to improve a tobacco flavor of the smoking article 100.

In some embodiments, the sheet-type material 10 may not include a nicotine component. For example, the sheet-type material 10 may include a plant extract expressing a tobacco flavor but may not include a nicotine component or a material including the nicotine component (e.g., a tobacco material or the like). Due to being able to improve a tobacco flavor while not increasing the amount of transferred nicotine of the smoking article 100, the sheet-type material 10 can simultaneously satisfy users' needs for low-nicotine smoking articles and meet users' smoking satisfaction.

In some embodiments, the sheet-type material 10 may include at least one of caffeine, an alkaloid material, and a cannabinoid material.

Here, the sheet-type material 10 may include theobromine or the like as the alkaloid material and include cannabidiol, tetrahydrocannabinol, or the like as the cannabinoid material.

Meanwhile, specific methods of applying the sheet-type material 10 may vary according to embodiments.

In some embodiments, as illustrated in FIG. 2, the sheet-type material 10 may be applied (added) in the form of cut pieces 111 to the smoking material portion 110. For example, the cut pieces 111 of the sheet-type material 10 may be mixed with a tobacco material 11 in the form of shredded tobacco (e.g., shredded tobacco leaves, shredded reconstituted tobacco leaves) and added to the smoking material portion 110. In this case, since the sheet-type material 10 and the tobacco material 11 are evenly distributed in the smoking material portion 110, a consistent, continuous tobacco flavor can be expressed during smoking.

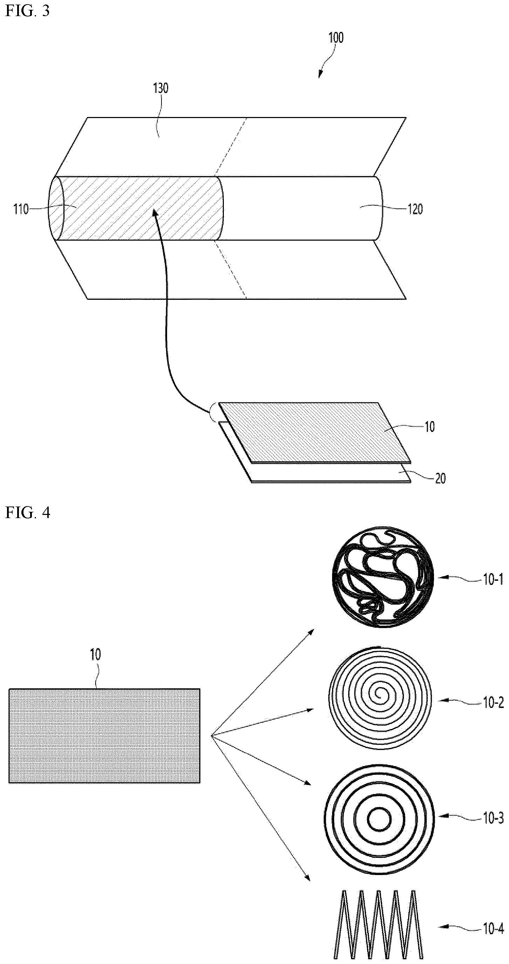

In some other embodiments, as illustrated in FIG. 3, the sheet-type material 10 may be applied (added) to the smoking material portion 110 together with a tobacco sheet 20. Here, the tobacco sheet 20 is a tobacco material produced in the form of a sheet and, for example, may be reconstituted tobacco such as reconstituted tobacco leaves but is not limited thereto. In the present example, the sheet-type material 10 may be appropriately mixed with the tobacco sheet 20 (e.g., the sheet-type material 10 may be stacked on the tobacco sheet 20, rolled together with the tobacco sheet 20, etc.) and added to the smoking material portion 110.

In still some other embodiments, as illustrated in FIG. 4, the sheet-type material 10 may be applied in a rolled or folded form to the filter portion 120 or the smoking material portion 110. For example, the sheet-type material 10 may be applied to the smoking material portion 110 in a form in which the sheet-type material 10 is rolled or folded in irregular patterns (see "10-1"), a form in which the sheet-type material 10 is rolled in a vortex form (see "10-2"), a form in which the sheet-type material 10 is rolled in a concentric form (see "10-3"), or a form in which the sheet-type material 10 is folded several times (e.g., a form in which the sheet-type material 10 is folded to secure an airflow path in the longitudinal direction; see " 10-4"). Here, the sheet-type material 10 may be added to the smoking material portion 110 together with a tobacco material or may form an independent segment (that is, a dedicated segment including only the sheet-type material 10) in the smoking material portion 110. Alternatively, the sheet-type material 10 may be added to a separate segment (e.g., a cooling segment included in the filter portion 120) formed outside the smoking material portion 110. When the sheet-type material 10 is applied in the above-listed forms, an airflow path may be secured in the longitudinal direction, and thus a smooth airflow and appropriate resistance to draw can be ensured. Also, an area of contact between the sheet-type material 10 and a high-temperature airflow is increased, and thus a tobacco flavor may be expressed better.

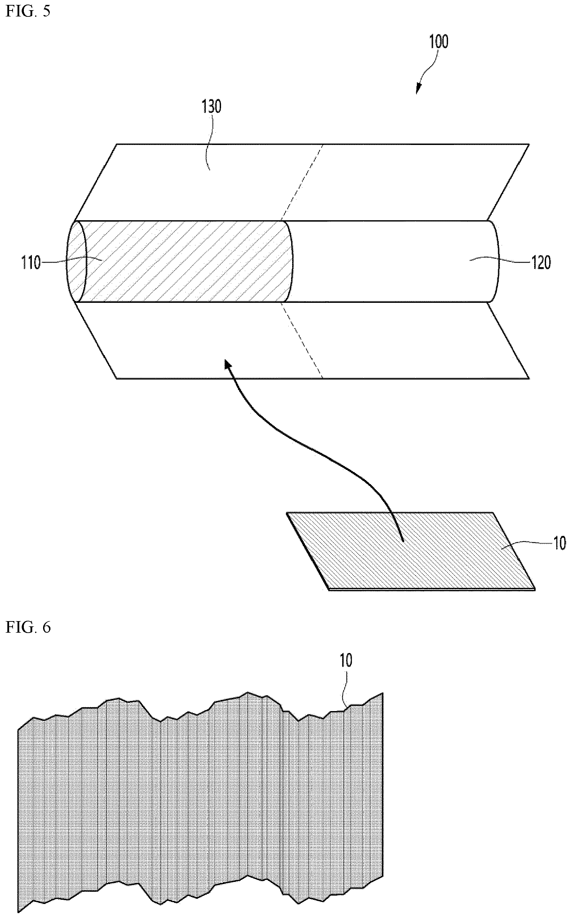

In yet some other embodiments, as illustrated in FIG. 5, the sheet-type material 10 may be applied (e.g., attached) to the wrapper 130. For example, the sheet-type material 10 may be disposed on an inner side of the wrapper 130. In a case in which the wrapper 130 includes a metal foil, the sheet-type material 10 may be disposed on an inner side of the metal foil. Alternatively, the sheet-type material 10 may constitute at least a portion of the wrapper 130. For example, the sheet-type material 10 itself may serve as the wrapper 130. Alternatively, a wrapping material produced in a form in which the sheet-type material 10 and wrapping paper are integrated may be used as the wrapper 130.

Meanwhile, in the previous embodiments, the sheet-type material 10 may be processed through a predetermined process. However, a specific processed form of the sheet-type material 10 may vary.

For example, as illustrated in FIG. 6, the sheet-type material 10 may be processed to be pleated or folded in the longitudinal direction (that is, the machine direction (MD)) of the smoking article 100. For example, the sheet-type material 10 may be pleated or folded according to at least one of a crimping process, a pleating process, a folding process, and a gathering process. Specifically, the crimping process is a process in which creep is assigned to a sheet surface through a difference between pressure and speed of a roller of a crimping device, and the crimping process may be divided into a wet process and a dry process. The wet process refers to a process in which base paper is soaked in water and then softened and crimped and undergoes a re-drying process. The dry process refers to a drying process using two dryers with different temperatures. Since the pleating process, folding process, and gathering process should already be familiar to those of ordinary skill in the art, further descriptions thereof will be omitted. According to the present example, a plurality of channels may be formed in the sheet-type material 10 in a longitudinal direction thereof by at least one of the processes described above, and a smooth airflow and appropriate resistance to draw can be ensured by the formed channels. Further, an area of contact between the sheet-type material 10 and a high-temperature airflow is increased, and thus a tobacco flavor can be expressed better.

As another example, as illustrated in FIG. 7, the sheet-type material 10 may be processed so that a plurality of holes 101 are formed therein. For example, the plurality of holes 101 may be formed in the sheet-type material 10 by a punching process. Here, diameters of the holes 101 may be in a range of about 0.05 mm to 5 mm or may be in a range of about 0.1 mm to 3 mm, about 0.2 mm to 2.5 mm, about 0.3 mm to 2.1 mm, or about 0.4 mm toe 1.8 mm. Within such numerical ranges, a smooth airflow and appropriate resistance to draw can be ensured. Further, an area of contact between the sheet-type material 10 and a high-temperature airflow is increased, and thus a tobacco flavor can be expressed better.

Materials constituting the sheet-type material 10 and a composition ratio of the materials, a thickness of the sheet-type material 10, a method of producing the sheet-type material 10, and the like may be designed in various ways, and some examples thereof will be described below.

The smoking article 100 according to some embodiments of the present disclosure has been described above with reference to FIGS. 1 to 7. According to the above description, by the sheet-type material 10 including a plant extract which can express a tobacco flavor, a tobacco flavor of the smoking article 100 can be significantly improved. For example, by applying the sheet-type material 10 to the smoking article 100 based on low-nicotine tobacco leaves, a tobacco flavor can be improved while not increasing the amount of transferred nicotine of the smoking article 100.

Hereinafter, smoking articles 200 and 300 with an improved tobacco flavor according to some other embodiments of the present disclosure will be described with reference to FIGS. 8 and 9. However, for clarity of the present disclosure, description of contents overlapping with those described above in relation to the smoking article 100 will be omitted.

FIG. 8 is an exemplary view illustrating the smoking article 200 with an improved tobacco flavor according to some other embodiments of the present disclosure.

As illustrated in FIG. 8, the smoking article 200 may include a smoking material portion 210 and a filter portion 220, and the filter portion 220 may include a plurality of segments 221 and 222.

The smoking material portion 210 may correspond to the smoking material portion 110 described above. Therefore, description thereof will be omitted.

Next, the filter portion 220 may be made of a first segment 221 and a second segment 222. Of course, the filter portion 220 may further include a third segment (not illustrated).

The first segment 221 may perform a function of cooling smoke and/or an aerosol generated from the smoking material portion 210. Therefore, the first segment 221 may be referred to as a "cooling segment 221" in some cases.

The first segment 221 may be produced in various forms. As an example, the first segment 221 may be a cylindrical paper tube that is made of a paper material and includes a hollow formed therein. As another example, the first segment 221 may be produced using a polymer material or a biodegradable polymer material. For example, the first segment 221 may be produced using a polylactic acid (PLA) fiber but is not limited thereto. As still another example, the first segment 221 may be produced as a cellulose acetate filter having a plurality of holes formed therein. As yet another example, the first segment 221 may be a tubular filter including a hollow formed therein. For example, the first segment 221 may be a cellulose acetate filter including a hollow formed therein. However, the first segment 221 is not limited thereto and may be produced in any other form as long as the first segment 221 can perform a cooling function.

In some embodiments, the sheet-type material 10 may be applied to the first segment 221. For example, the sheet-type material 10 may be disposed in a form of being rolled on the hollow of the first segment 221 or may be attached onto an inner wall of the hollow. As still another example, the sheet-type material 10 which is processed (e.g., punched) so that a plurality of holes are formed therein may be disposed in a form being rolled on the hollow. In this case, an airflow path can be easily secured through the plurality of holes (e.g., 101), and a cooling effect can also be improved due to an increase in an area of contact between the sheet-type material 10 and the airflow.

Next, the second segment 222 may perform a function of filtering smoke and/or an aerosol that passed through the first segment 221. Therefore, the second segment 222 may be referred to as a "filter segment 222" in some cases. Alternatively, due to being positioned at a mouthpiece portion, the second segment 222 may be referred to as a "mouthpiece segment 222."

In some embodiments, the second segment 222 may include at least one capsule 240. Here, the capsule 240 may perform a function of producing a flavor or perform a function of generating an aerosol. For example, the capsule 240 may have a structure in which a liquid including a flavoring is wrapped by a film. Also, the capsule 240 may have a spherical or cylindrical shape, but the shape of the capsule 240 is not limited thereto.

Next, a wrapper 230 may correspond to the wrapper 130 described above. Therefore, description thereof will be omitted.

Meanwhile, although not illustrated in FIG. 8, the smoking article 200 may further include a plug (not illustrated) disposed at an end. For example, the plug may be disposed at an upstream end of the smoking article 200 and perform a function of appropriately controlling the overall length of the smoking article 200. Also, in a case in which the smoking article 200 is inserted into an aerosol generation device (not illustrated), the plug may perform a function of controlling the smoking material portion 210 to be disposed at an appropriate position inside the aerosol generation device.

FIG. 9 is an exemplary view schematically illustrating the smoking article 300 according to still some other embodiments of the present disclosure.

As illustrated in FIG. 9, the smoking article 300 may include a smoking material portion 310 and a filter portion 320, the smoking material portion 310 may include a plurality of segments 311 and 312, and the filter portion 320 may include a plurality of segments 321 and 322.

As illustrated, the smoking material portion 310 may be made of a first segment 311 and a second segment 312. Of course, the smoking material portion 310 may further include a third segment (not illustrated).

The first segment 311 may include a moisturizer. For example, the first segment 311 may include crimped paper impregnated with a moisturizer. For example, the moisturizer may include at least one of glycerin, propylene glycol, ethylene glycol, dipropylene glycol, diethylene glycol, triethylene glycol, tetraethylene glycol, and oleyl alcohol.

Next, the second segment 312 may include a nicotine-generating substrate such as a tobacco material. For example, the nicotine-generating substrate may include shredded tobacco, tobacco particles, tobacco sheets, tobacco beads, and tobacco granules. As another example, the nicotine-generating substrate may include crimped paper impregnated with a tobacco extract (or a nicotine liquid). When the nicotine-generating substrate is heated, nicotine may be generated from the nicotine-generating substrate and transferred to the filter portion 320.

Next, the filter portion 320 may include the plurality of segments 321 and 322. For example, the filter portion 320 may include a third segment 321 configured to perform a cooling function and a fourth segment 322 configured to perform a filtering function. The contents described above in relation to the filter portion 220 of FIG. 8 may identically apply to the filter portion 320, and thus further description thereof will be omitted.

Next, a wrapper 330 may correspond to the wrapper 130 described above. Therefore, description thereof will be omitted.

The smoking articles 200 and 300 according to some other embodiments of the present disclosure have been described above with reference to FIGS. 8 and 9. Hereinafter, the sheet-type material 10 and a method of producing the same according to some embodiments of the present disclosure will be described in more detail.

The sheet-type material 10 may be produced through a step of producing a sheet composition in a liquid phase (e.g., a slurry form) and a step of molding the produced sheet composition into the form of a sheet and drying the molded sheet composition. Here, the liquid phase may not only include a liquid form but also include a form in which a liquid and a solid are mixed (e.g., a slurry form). For example, the sheet-type material 10 may be produced by casting a sheet composition on a predetermined substrate and drying the sheet composition. However, the present disclosure is not limited thereto, and a specific method of producing the sheet-type material 10 may be changed.

Meanwhile, a specific composition of the sheet composition may be designed to vary.

In some embodiments, the sheet composition may include distilled water, a hydrocolloid material, and a plant extract. Of course, the sheet composition may further include another flavoring in addition to the plant extract. The sheet-type material 10 produced from the sheet composition may hold a large amount of flavor and thus significantly improve a tobacco flavor of a smoking article (e.g., 100). Further, since the sheet-type material 10 can be attached to a wrapper (e.g., 130) without a separate adhesive due to the hydrocolloid material, a process of placing the sheet-type material 10 can be simplified, and the sheet-type material 10 may be free from a safety problem due to an adhesive. Hereinafter, for convenience of description, the plant extract and the other flavoring will be collectively referred to as "flavorings."

The distilled water may be a component for controlling the viscosity of the slurry-type sheet composition.

Next, the hydrocolloid material may be a material for covering and fixing the flavorings and may be a sheet-forming agent for forming a sheet. Examples of the hydrocolloid material may include gelatin, agar, gellan gum, pectin, guar gum, xanthan gum, glucomannan, hydroxypropyl methylcellulose (HPMC), methyl cellulose (MC), ethyl cellulose (EC), carboxymethyl cellulose (CMC), and starch, but the hydrocolloid material is not limited thereto.

Next, examples of the flavorings may include menthol, a natural vegan flavoring (e.g., cinnamon, sage, herb, chamomile, kudzu, amacha, clove, lavender, cardamom, clove, nutmeg, bergamot, geranium, honey essence, rose oil, lemon, orange, cinnamon, caraway, jasmine, ginger, coriander, vanilla extract, spearmint, peppermint, cassia, coffee, celery, cascarilla, sandalwood, cocoa, ylang-ylang, fennel, anise, licorice, St. John's bread, plum extract, peach extract, etc.), sugars (e.g., glucose, fructose, isomerized sugar, caramel, etc.), cocoa (e.g., powder, extract, etc.), esters (e.g., isoamyl acetate, linalyl acetate, isoamyl propionate, linalyl butyrate, etc.), ketones (e.g., menthone, ionone, damascenone, ethyl maltol, etc.), alcohols (e.g., geraniol, linalool, anetol, eugenol, etc.), aldehydes (e.g., vanillin, benzaldehyde, anisaldehyde, etc.), lactones, (e.g., γ-undecalactone, γ-nonalactone, etc.), an animal flavoring (e.g., musk, ambergris, civet, castoreum, etc.), and hydrocarbons (e.g., limonene, pinene, etc.). The flavorings may be used in a solid state or may be used by being dissolved or dispersed in an appropriate solvent, e.g., propylene glycol, ethyl alcohol, benzyl alcohol, or triethyl citrate. Also, flavorings which are prone to dispersion in a solvent due to addition of an emulsifier, for example, hydrophobic flavorings or oil-soluble flavorings, may be used. These flavorings may be used alone or used in a mixture. However, the scope of the present disclosure is not limited by the examples described above.

In some embodiments, the sheet composition may include modified cellulose among various hydrocolloid materials. Here, "modified cellulose" may refer to cellulose in which a specific functional group is substituted in a molecular structure. Examples of modified cellulose may include HPMC, MC, CMC, and EC, but modified cellulose is not limited thereto. For example, HPMC may have a grade in a range of about 4 to 40000 according to a proportion and molecular weight in which a hydroxypropyl group and a methyl group (or methoxy group) are substituted. The viscosity of modified cellulose may be determined according to the grade. More specifically, physicochemical characteristics of HPMC relate to a proportion of the methoxy group and a proportion and molecular weight of the hydroxypropyl group, and according to The United States Pharmacopeial Convention (USP), types of HPMC may be classified into HPMC1828, HPMC2208, HPMC2906, HPMC2910, and the like according to proportions of the methoxy group and hydroxypropyl group. Here, the first two numbers may refer to a proportion of the methoxy group, and the last two numbers may refer to a proportion of the hydroxypropyl group. As a result of continuous experiments by the inventors of the present disclosure, the sheet-type material 10 produced from the sheet composition including modified cellulose was confirmed as having excellent physical properties and holding a large amount of flavor.

Also, in some embodiments, the sheet composition may further include low methoxyl pectin (LM-pectin). Alternatively, the sheet composition may include LM-pectin, among hydrocolloid materials, as a sheet-forming agent. LM-pectin is a low ester-pectin or low methoxyl pectin in which relatively little esterification is performed. Specifically, LM pectin may be pectin that contains a carboxyl group by less than about 50% in a molecular structure. Due to having a characteristic of not gelating when cooled unlike carrageenan, LM-pectin may lower the viscosity of the slurry-type sheet composition (e.g., to about 600 cp to 800 cp). Further, since it is possible to produce a slurry-type sheet composition without an emulsifier, the sheet composition may be free from a safety problem due to an emulsifier.

LM-pectin may contain a carboxyl group by less than about 50%, less than about 40%, less than about 30%, less than about 20%, or less than about 10% in a molecular structure. The lower the content of carboxyl group in the molecular structure of LM-pectin, the lower the viscosity of a slurry including LM-pectin.

Also, in some embodiments, the sheet composition may further include a bulking agent. The bulking agent may be a material that increases the total mass of components other than distilled water (that is, dry mass) to increase the volume of the sheet-type material 10 being produced but does not affect the original function of the sheet-type material 10. Specifically, the bulking agent may have characteristics of increasing the volume of the sheet-type material 10 but not adversely affecting the flavor retaining function of the sheet-type material 10 while not substantially increasing the viscosity of the slurry. The bulking agent may be starch, modified starch, or starch hydrolyzate but is not limited thereto.

Modified starch refers to starch acetate, oxidized starch, hydroxypropyl distarch phosphate, hydroxypropyl starch, distarch phosphate, monostarch phosphate, phosphorylated distarch phosphate, or the like.

Starch hydrolyzate refers to a material obtained by a process that includes a process of hydrolyzing starch. For example, starch hydrolyzate may include a material obtained by directly hydrolyzing starch (that is, dextrin) or a material obtained by heating and hydrolyzing starch (that is, indigestible dextrin). For example, the bulking agent may be dextrin, more specifically, cyclodextrin.

Generally, starch hydrolyzate may be starch hydrolyzate having a dextrose equivalent (DE) value in a range of about 2 to about 40 or may be starch hydrolyzate having a DE value in a range of about 2 to about 20. For example, as the starch hydrolyzate having a DE value in a range of about 2 to about 20, Pinedex #100 (Matsutani Chemical Industry Co. Ltd), Pinefiber (Matsutani Chemical Industry Co. Ltd), TK-16 (Matsutani Chemical Industry Co. Ltd), or the like may be utilized.

Here, "DE" is an abbreviation of "dextrose equivalent," and the DE value indicates a degree of hydrolysis of starch, that is, a saccharification rate of starch. In the present disclosure, the DE value may be a value measured by the Willstatter-Schudel method. Characteristics of hydrolyzed starch (starch hydrolyzate), for example, characteristics such as a molecular weight of starch hydrolyzate and arrangement of sugar molecules constituting starch hydrolyzate, may not be constant for each moledule of starch hydrolyzate and may be present with a certain distribution or variation. Due to the distribution or variation of the characteristics of starch hydrolyzate or a difference in cut sections, each molecule of starch hydrolyzate may exhibit different physical properties (e.g., DE value). In this way, starch hydrolyzate is a set of molecules exhibiting different physical properties, but a measurement result (that is, DE value) by the Willstatter-Schudel method is considered a representative value indicating the degree of hydrolysis of starch.

Starch hydrolyzate may be selected from the group consisting of dextrin having a DE value in a range of about 2 to about 5, indigestible dextrin having a DE value in a range of about 10 to about 15, and a mixture thereof. For example, as the dextrin having a DE value in a range of about 2 to about 5, Pinedex #100 (Matsutani Chemical Industry Co. Ltd) may be utilized. For example, as the indigestible dextrin having a DE value in a range of about 10 to about 15, Pinefiber (Matsutani Chemical Industry Co. Ltd) may be utilized.

Also, in some embodiments, the sheet composition may further include a plasticizer. The plasticizer may add appropriate flexibility to the sheet-type material 10 and thus improve the physical property of the sheet. For example, the plasticizer may include at least one of glycerin and propylene glycol but is not limited thereto.

Also, in some embodiments, the sheet composition may further include an emulsifier. The emulsifier may allow a highly fat-soluble flavoring (e.g., a plant extract) and a water-soluble hydrocolloid material to be mixed well and increase the amount of flavor held in the sheet-type material 10. An example of the emulsifier may include lecithin, but the emulsifier is not limited thereto.

Meanwhile, the sheet-type material 10 produced from the above-described sheet composition may have various content ratios (composition ratios).

In some embodiments, the sheet-type material 10 may include, with respect to a total of 100 parts by weight, about 2 to about 15 parts by weight of moisture, about 25 to about 90 parts by weight of modified cellulose, and about 0.1 to about 60 parts by weight of a flavoring.

Also, in some embodiments, the sheet-type material 10 may include, with respect to a total of 100 parts by weight, about 2 to about 15 parts by weight of moisture, about 25 to about 90 parts by weight of LM-pectin, and about 0.1 to about 60 parts by weight of a flavoring.

Also, in some embodiments, the sheet-type material 10 may include, with respect to a total of 100 parts by weight, about 2 to about 15 parts by weight of moisture, about 1 to about 60 parts by weight of a hydrocolloid material, about 1 to about 60 parts by weight of LM-pectin, and about 0.1 to about 60 parts by weight of a flavoring.

In some embodiments, with respect to a total of 100 parts by weight of the sheet-type material 10, a plasticizer may be included by as much as about 0.1 to about 15 parts by weight. Within such numerical ranges, a sheet having appropriate flexibility can be formed. For example, in a case in which the amount of added plasticizer is too small, flexibility of the sheet may be decreased and thus the sheet-type material may be easily damaged during processing, and in a case in which the amount of added plasticizer is too large, the sheet may not be formed well.

The sheet-type material 10 and a method of producing the same according to some embodiments of the present disclosure have been described above.

The embodiments of the present disclosure have been described above with reference to the accompanying drawings, but those of ordinary skill in the art to which the present disclosure pertains should understand that the present disclosure may be embodied in other specific forms without changing the technical spirit or essential features thereof. Therefore, the embodiments described above should be understood as being illustrative, instead of limiting, in all aspects. The scope of the present disclosure should be interpreted according to the claims below, and any technical spirit within the scope equivalent to the claims should be interpreted as falling within the scope of the technical spirit defined by the present disclosure.

## Claims

1. A smoking article comprising:
a smoking material portion;
a filter portion; and a wrapper configured to wrap around at least a portion of the smoking material portion,
wherein a sheet-type material including a plant extract is applied to the smoking material portion or the wrapper.

2. The smoking article of claim 1, wherein the plant extract includes at least any one of a cocoa extract, a carob bean extract, a fenugreek extract, a chamomile extract, an alfalfa extract, an angelica root extract, a benzoin extract, a chicory extract, a coffee extract, an immortelle extract, a labdanum extract, a lavage extract, a mate extract, a tea extract, a valerian root extract, a prune extract, and a raisin extract.

3. The smoking article of claim 1, wherein the sheet-type material includes a modified cellulose material.

4. The smoking article of claim 3, wherein the modified cellulose material includes at least one material selected from hydroxypropyl methylcellulose (HPMC), methyl cellulose (MC), ethyl cellulose (EC), and carboxymethyl cellulose (CMC).

5. The smoking article of claim 1, wherein the sheet-type material does not include a nicotine component.

6. The smoking article of claim 1, wherein the sheet-type material includes at least one material among caffeine, an alkaloid material, and a cannabinoid material.

7. The smoking article of claim 1, wherein the smoking material portion includes a tobacco material formed by processing tobacco leaves whose nicotine content is 0.5 wt% or lower.

8. The smoking article of claim 1, wherein the sheet-type material is included in a cut form in the smoking material portion.

9. The smoking article of claim 1, wherein the sheet-type material constitutes at least a portion of the wrapper or is disposed on an inner side of the wrapper.
